# EUROPEAN PATENT APPLICATION

(11) **EP 1 900 581 A2**
(43) Date of publication of application: **19.03.2008**
(21) Application number: 07253465.4
(22) Date of filing: 31.08.2007
(51) Int. Cl.: B60S 3/04, B60S 3/06

(54) **Vehicle wash system including multiple overhead bridges**

(30) Priority: 12.09.2006 US 531026
(71) Applicant: Delaware Capital Formation, Inc., Wilmington, DE 19803 (US)
(72) Inventor: Dollhopf, Kenneth J., Green Bay, Wisconsin 54313 (US)
(74) Representative: Hackett, Sean James

(57) **Abstract**

An automatic vehicle wash system (10) that includes a first, front overhead bridge (32) and a second, back overhead bridge (34) that combine to carry out a wash process on the vehicle. The first overhead bridge (32) is operable to perform a first wash cycle on the entire vehicle. The second overhead bridge is independently operable to perform a second wash cycle on the entire vehicle, where the first wash cycle is different from the second wash cycle. The first overhead bridge includes a side cleaning device (36) that performs a friction wash step on the vehicle during the first wash process. The second overhead bridge includes a top brush (64) that and a pair of high pressure spray manifolds. The movement of the first and second overhead bridges along the length of the vehicle are coordinated by a central controller (90) such that the first wash cycle and the second wash cycle can be completed simultaneously.

## Description

### FIELD OF THE INVENTION

The present invention relates to a system and method for washing a vehicle positioned within a wash area. More specifically, the present invention relates to a method and system for washing a vehicle incorporating multiple overhead bridges each independently movable to perform separate wash cycles of a complete wash process on the vehicle positioned within the wash area.

### BACKGROUND OF THE INVENTION

Currently, car wash systems exist that utilize a portal gantry that is movable along the floor of a vehicle wash area to wash a stationary vehicle positioned within the wash area. Many of the portal gantry wash systems include three or five brushes that contact the surface of the vehicle to perform the wash process. As an example, the portal gantry may include a horizontal brush for cleaning the top surface of a vehicle and a pair of side brushes that contact the sides of the vehicle during the wash process. Typically, a portal gantry wash system that includes multiple brushes starts the wash process at the front of the vehicle and coordinates the movement of the side brushes to provide effective frictional cleaning of the stationary vehicle. During the wash process, the portal gantry makes multiple passes over the vehicle. In a system including only a single portal gantry, the time required for the single gantry to make multiple passes along the stationary vehicle increases the amount of time required for each wash, thereby decreasing the throughput of the vehicle wash facility.

In prior art portal gantry systems using friction wash technology, customers must initially drive into or up to the portal gantry as they enter the wash area. Since the portal gantry typically includes multiple side brushes, the customer is presented with a visually intimidating environment. Further, once the wash process has been completed, the customer must typically drive through the machine as they exit the wash area. As the freshly cleaned car exits the wash area, the car passes beneath the portal gantry and the portal gantry has a tendency to drip dirty fluid onto the vehicle after the vehicle has been cleaned and dried, which leaves the customer disappointed with the wash system. Some prior art systems include special devices to wipe or blow off drips prior to the customer exiting. These additional devices typically add cost and complexity to the prior art wash systems.

In an attempt to increase the throughput of friction-based vehicle washing systems, washing systems that incorporate multiple portal gantries that either move together or separately have been developed. As an example, U.S. Patent No. 6,193,808 discloses a portal gantry system that includes two movable gantries used to wash a motor vehicle. Each of the portal gantries performs a different portion of a wash process such that the system provides an increased vehicle throughput in as small of a wash area as possible. In the '808 patent, the first gantry cleans the front and sides of the vehicle up to the driver's door, while the second gantry cleans the vehicle from the driver's door back to the rear of the vehicle.

A significant problem that exists with the multiple portal gantry system is that an area of the vehicle exists where one cleaning device stops and another must begin, which requires one of the gantries to overlap the other to ensure that the vehicle is effectively cleaned. The overlapping coverage of the multiple portal gantries increases the total cleaning time, resources and complexity of the control required to carry out the wash process. As described in the '808 patent, dual portal gantry systems typically closely couple the portal gantries to decrease the amount of complexity required for the control process.

In a typical portal gantry washing system that utilizes multiple brushes, the brushes utilize textile materials to clean the vehicle surfaces using friction. Currently, various types of cleaning technologies and materials are utilized in friction-based cleaning systems. One type of preferred material is a closed-cell foam, although cloth, nylon bristles and other materials are also utilized. When utilizing friction materials, the typical application is to rotate the material along the surface of the vehicle. The rotation of the brush transfers a significant amount of motion to the vehicle surface to provide the required force to remove the dirt from the surface of the vehicle. In systems that utilize multiple brushes located on opposite sides of the vehicle, the brushes are preferably rotated in opposite directions such that as the rotating brush is moved along the side of the vehicle, the rotation of the brush is safe for the vehicle surfaces and equipment that may be mounted to the vehicle, such as mirrors, trailer hitches and air deflectors.

In addition to the friction-based car washing systems described above, touch-free overhead gantry systems, such as sold by PDQ Manufacturing, Inc. under the LASERWASH® 4000, G5 and M5 product names are widely in use. Touch-free overhead gantry systems include a single movable overhead bridge that is mounted to an overhead support and includes a generally L-shaped spray arch that moves along the perimeter of the vehicle during the wash process. The spray arm directs detergents and a high-pressure spray of water onto the vehicle to remove dirt from the vehicle. A series of vehicle positioning sensors determine the position of the vehicle such that the distance from the perimeter of the vehicle to the spray arch can be controlled for optimal cleaning.

Although a touch-free overhead gantry system is effective at removing most dirt from a vehicle, the touch-free system does not actually contact the vehicle to remove difficult particles. Difficult particles may require direct contact in order to be removed from the vehicle, as is possible with a friction-type washing system. Friction-type washing systems typically have lower operating costs due to reduced detergent strengths and the reduced quantities of water that are required for effective cleaning.

### SUMMARY OF THE INVENTION

The present invention is an automatic vehicle wash system for washing a vehicle positioned within a wash area. The automatic vehicle wash system includes multiple overhead bridges that are individually capable of providing complete wash cycles to enhance the overall wash process performed by the vehicle wash system. The automatic vehicle wash system combines components from a friction-based wash system and a touch-free wash system to provide customers with an open, safe and effective vehicle wash system.

The vehicle wash system includes an overhead support that is positioned above the vehicle when the vehicle is within the wash area. The overhead support can be directly mounted to the walls of a wash area, can be suspended from the roof of a wash area or can be supported on the wash area floor by a series of support posts. Wash areas may also require that a combination of mounting methods be used to position the overhead support.

The automatic vehicle wash system includes a first, front overhead bridge that is movable along the overhead support and is operable to perform a first wash cycle on the vehicle. In one embodiment, the front overhead bridge includes a side cleaning device, such as aside brush, that is movable into contact with the vehicle to perform a friction-based cleaning process on the vehicle. The side brush is mounted to a reversible drive motor, which in turn is mounted to a trolley. The trolley is movable along the front bridge such that the side brush can move across the front and back of the vehicle when the vehicle is positioned within the wash area.

The front overhead bridge also includes ultrasonic sensors that detect the presence of the vehicle beneath the front overhead bridge such that a controller for the front overhead bridge can position the vehicle within the wash area.
Further, the front overhead bridge may optionally include a series of blower assemblies that are each operable to direct a flow of air onto the vehicle to dry the vehicle as a final step after the wash process has been completed.

In addition to the front overhead bridge, the automatic vehicle wash system includes a second, back overhead bridge that is also movable along the overhead support and operable to perform a second wash cycle on the vehicle. Preferably, the first wash cycle performed by the front overhead bridge and the second wash cycle performed by the back overhead bridge includes different operational steps and sequences such that the front overhead bridge and back overhead bridge combine to perform the entire wash process.

In one embodiment, the back overhead bridge includes a top cleaning device, such as a horizontal top brush that is rotatable and selectively movable into contact with a top surface of the vehicle to perform a second, friction-based wash cycle on the vehicle. The top brush is selectively movable into contact with the vehicle by a height adjustment assembly controlled by a controller contained on the back overhead bridge. Preferably, the top brush is controlled by the controller monitoring the electrical power consumed by the drive motor for the top brush as the top brush moves over the vehicle top. The monitoring of the power used allows the controller to adjust the top brush position within an acceptable range based on a control algorithm. Additionally, an ultrasonic sensor detects the top surface of the vehicle and the controller of the back overhead bridge can control the movement of the top brush when special conditions are detected. A typical special condition is the detection of the open-bed of a pickup truck. When an open-bed of a pickup truck is detected, the top brush is typically raised to avoid problems with lowering the brush into the open-bed. Preferably, the back overhead bridge also includes a pair of spray arms positioned on opposite sides of the vehicle that each direct detergent, protectants, rinse fluid or high pressure spray onto the vehicle during a second wash cycle. Each of the spray arms may include a wheel cleaning device such that each of the side arms can perform a wheel cleaning process on the vehicle during a second wash cycle.

When the vehicle wash system is performing the wash process, a central controller in communication with both the front overhead bridge and the back overhead bridge controllers monitors the positions of the front and back overhead bridges to ensure that the bridges do not contact each other during the wash process. During the wash process, the front and back overhead bridges can move in either the same direction or opposite directions during the performance of their separate wash cycles. Additionally, the front and back overhead bridges can move at different speeds and change speeds throughout the wash process.

During the performance of a wash process, the front overhead bridge is movable along the overhead support to perform a first wash cycle on the entire length of the vehicle, including both the front and rear bumper of the vehicle. Likewise, during a separate second wash cycle, the back overhead bridge is movable along the entire length of the vehicle to perform the second wash cycle on the entire vehicle, including both the front and rear surfaces of the vehicle. Both the front and back overhead bridges concurrently perform the first and second wash cycles to reduce the amount of time required to clean the vehicle.

### BRIEF DESCRIPTION OF THE DRAWINGS

The drawings illustrate the best mode presently contemplated of carrying out the invention. In the drawings:

Fig. 1 is a top view of the automatic vehicle wash system of the present invention prior to beginning of the wash cycle;

Fig. 2 is a view of the first, front overhead bridge taken along line 2-2 of Fig. 1;

Fig. 3 is a view of the first, front overhead bridge taken along line 3-3 of Fig. 1;

Fig. 4 is a view of the second, back overhead bridge taken along line 4-4 of Fig. 1;

Fig. 5 is a view of the second, back overhead bridge taken along line 5-5 of Fig. 1;

Fig. 6 is a top view of the automatic vehicle wash system as the back bridge begins to perform its wash cycle as part of the wash cycle;

Fig. 7 illustrates the further movement of the back bridge during the performance of the wash cycle;

Fig. 8 is a top view illustrating the complete movement of the back bridge to wash the front of the vehicle positioned within the wash area;

Fig. 9 is a top view illustrating the movement of both the front bridge and the back bridge during the wash cycle;

Fig. 10 illustrates the movement of the front brush along the front bumper of the vehicle as the back overhead bridge continues to perform its wash cycle;

Fig. 11 illustrates the further movement of the front bridge along the length of the vehicle and the position of the back bridge in its home position;

Fig. 12 illustrates the movement of the front brush along the back surface of the vehicle as part of the wash cycle;

Fig. 13 illustrates the movement of the front brush along the right side of the vehicle as part of the wash cycle;

Fig. 14 is a side view illustrating the contact between the top brush and the vehicle as the back bridge performs its wash cycle;

Fig. 15 is a flow diagram indicating the movements and operations of both the front bridge and back bridge during a wash process; and

Fig. 16 is a similar flow diagram illustrating the movement of both the front bridge and the back bridge during the wash process.

### DETAILED DESCRIPTION OF THE INVENTION

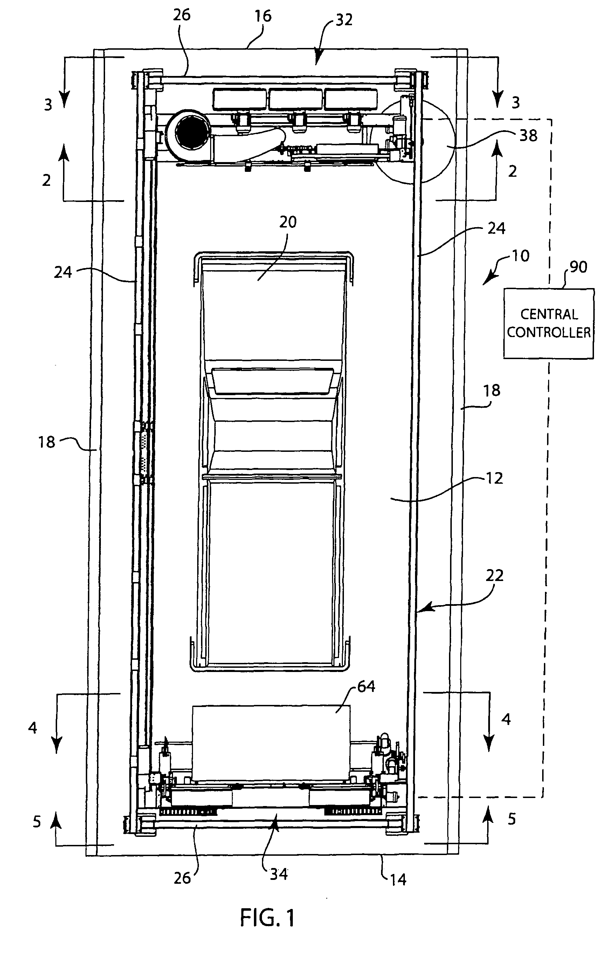

Fig. 1 illustrates an automatic vehicle wash system of the present invention. As illustrated in Fig. 1, the vehicle wash system 10 is located within a wash area 12 that extends from an entrance 14 to an exit 16 and is defined by a pair of side boundaries 18. As illustrated in Fig. 1, a vehicle 20 is positioned within the wash area and is located within a range of acceptable positions by a vehicle positioning system that does not include any components mounted to the wash area floor.

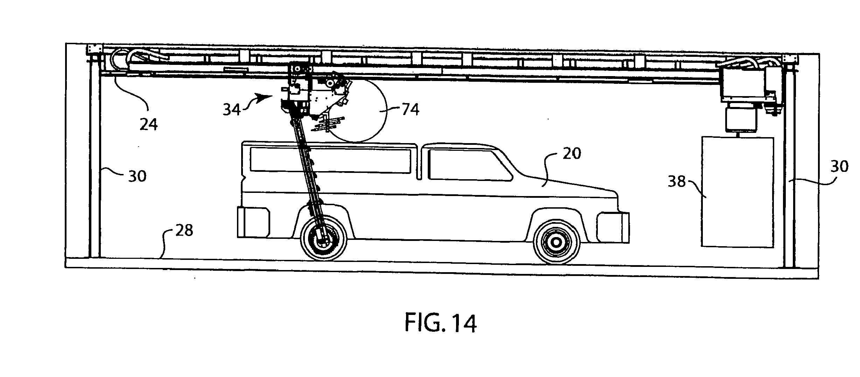

The vehicle wash system 10 includes an overhead support 22 having a pair of spaced overhead side rails 24 and may include a pair of end rails 26. The side rails 24 and end rails 26 are positioned above the vehicle 20 and the entire overhead support structure 22 can be mounted directly to the inner surface of outer walls. Alternatively the overhead support structure 22 can be supported on the floor 28 of the wash area by a series of spaced support posts 30, as shown in Fig. 14. Additionally the overhead support structure 22 can be suspended from the ceiling in an alternate embodiment. In any case, the entire overhead support 22 is positioned above the vehicle.

Referring back to Fig. 1, the vehicle wash system 10 includes a first, front overhead bridge 32 and a second, back overhead bridge 34 that are each independently movable along the pair of spaced side rails 24 to carry out separate cycles of a complete wash process. Throughout the remaining portions of this text, the first overhead bridge 32 will be referred to as the front overhead bridge while the second overhead bridge 34 will be referred to as the back overhead bridge for the ease of understanding. However, it should be understood that the position of the first and second overhead bridges 32, 34 relative to the vehicle could be interchanged while operating within the scope of the present invention. Therefore, the positional terms "front" and "back" should not be viewed as limiting, but instead are included for the ease of understanding.

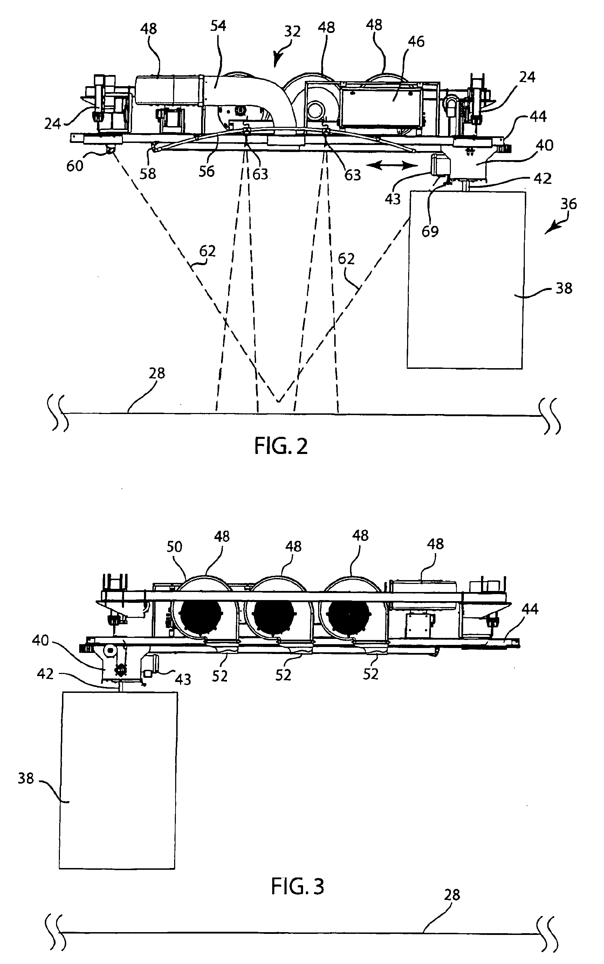

Figs. 2 and 3 provide a detailed view of the operating components of the front overhead bridge 32. The front overhead bridge 32 is supported on and movable along the pair of spaced side rails 24 such that the front overhead bridge 32 can move along the entire vehicle when the vehicle is positioned within the wash area. In the embodiment shown in Fig. 2, the front overhead bridge includes a side cleaning device 36 that is operational to clean the side of the vehicle. In the preferred embodiment of the invention, the side cleaning device 36 is a rotating side brush 38 supported beneath a trolley 40 by a drive shaft 42 of a drive motor 43. In the preferred embodiment of the invention, the side brush 38 includes a plurality of individual wash strips formed from closed-cell foam. However, other materials, such as cloth, nylon bristle or similar materials can be utilized while operating within the scope of the present invention.

Although the side cleaning device 36 is shown in the Figures as being a rotating side brush 38, it is contemplated that the side cleaning device 36 could be a high pressure spray manifold mounted beneath the trolley. The high pressure spray manifold could be configured to direct a high pressure spray of cleaning fluid onto the vehicle as the front overhead bridge 32 carries out the first wash cycle.

The trolley 40 supports the drive motor and the side brush 38 and is movable along the length of the support rail 44 of the front overhead bridge 32 during the wash cycle. In the preferred embodiment of the invention, the drive motor coupled to the side brush 38 is a reversible electric motor, the operation of which is controlled by the front overhead bridge controller mounted within the enclosure 46 of Fig. 2. However, other drive motors, such as hydraulic motors, or a motor that is integrated into the side brush can be utilized while operating within the scope of the present invention. The front bridge controller controls the operation of the drive motor and the movement of the trolley 40 along the support rail 44 during a wash cycle.

In the preferred embodiment of the invention, the front overhead bridge 32 further includes a series of blower assemblies 48 that are positioned stationary relative to the front overhead bridge. Each blower assembly 48 includes a motor that rotates an internal fan and an air shroud 50 that directs a flow of air out of a nozzle 52 onto the vehicle to dry the vehicle. As illustrated in Fig. 2, one of the blower assemblies 48 is mounted on its side and directs the flow of air through an extended conduit 54 generally aligned with the center of the front overhead bridge 32 to provide additional air flow over the center of the vehicle as it is being dried.

In the preferred embodiment of the invention, the front overhead bridge 32 further includes an overhead spray manifold 56 that is connected to a low pressure supply of fluid, such as spot free water. The overhead spray manifold 56 includes a series of outlets 58 that direct fluid onto the vehicle as the front overhead bridge 32 passes along the vehicle. In addition to applying spot free water for rinsing, the overhead spray manifold 56 can receive a supply of fluid including fresh water, a detergent fluid or a protectant fluid to provide a wash service to the vehicle.

The front overhead bridge 32 includes a first pair of vehicle presence sensors 63 that each transmit an ultrasonic beam downward to the floor of the wash area. The vehicle presence sensors 63 receive the reflected ultrasonic beam and are used to detect the presence of a vehicle beneath the front overhead bridge 32. Each of the first pair of vehicle presence sensors 63 are coupled to the front bridge controller such that the front bridge controller can control the operation of the front overhead bridge based upon detection of the vehicle.

In addition to the first pair of vehicle presence sensors 63 shown in Fig. 2, the front bridge 32 includes a second pair of vehicle presence sensors 60 that combine to transmit an ultrasonic beam 62 towards the center of the floor and receive the reflected beam from the floor of the wash area. The second pair of vehicle presence sensors 60 are used to detect the presence of a vehicle beneath the front overhead bridge 32. As will be described in detail below, the first pair of vehicle presence sensors 63 and the second pair of vehicle presence sensors 60 combine to accurately position the vehicle within the wash area prior to beginning of the wash process.

Although not shown in Figs. 2 and 3, the side cleaning device 36 includes a side brush spray nozzle that directs a supply of fluid, such as water with detergent, onto the side brush 38 as the side brush rotates. The fluid supplied onto the side brush 38 further aids in enhancing the performance of the side brush 38 to remove dirt from the vehicle.

The trolley 40 includes a vehicle front spray nozzle 69 that directs a supply of fluid, such as bug remover, onto the vehicle 20 as the trolley moves. The fluid supplied onto the vehicle 20 further aids in enhancing the performance of the wash system to remove bugs and dirt from the vehicle.

Although not shown in detail in Figs. 2 and 3, the front overhead bridge 32 includes a drive assembly that moves the entire front overhead bridge 32 along the length of the side rails 24. The drive assembly for the front overhead bridge 32 is controlled by the controller of the front overhead bridge. Preferably, each of the side rails 24 includes spaced metallic targets that are sensed by the controller such that the controller can identify the position of the front overhead bridge 32 along the side rails as the front overhead bridge moves in either the forward or reverse direction.

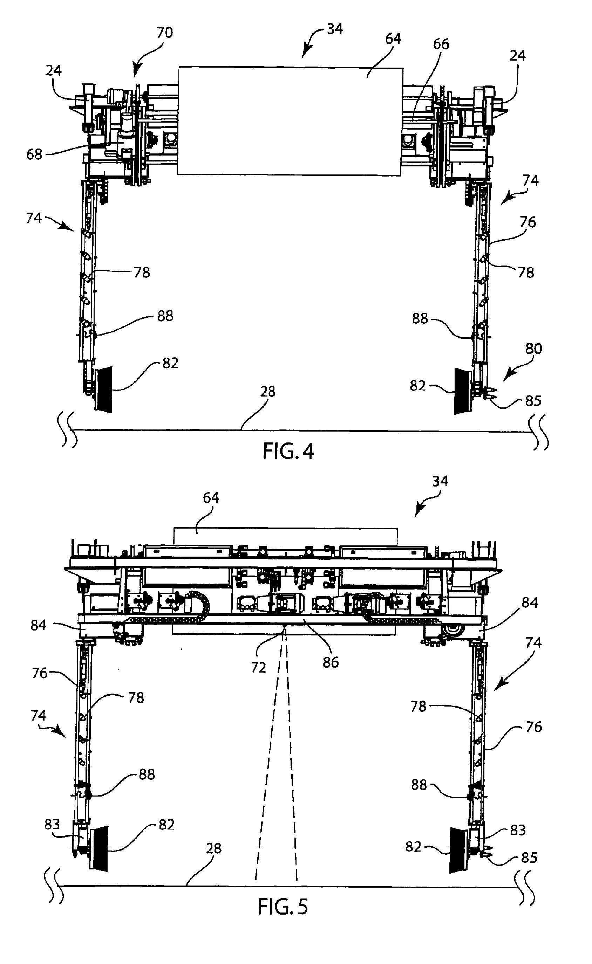

Figs. 4 and 5 illustrate the details of the second, back overhead bridge 34. Like the front overhead bridge described previously, the back overhead bridge 34 is movable along the pair of spaced side rails 24 to perform a second wash cycle on the vehicle positioned in the wash area. The back overhead bridge 34 includes a top cleaning device, such as top brush 64 mounted to a drive shaft 66 and rotatable by a drive motor 68. The top brush 64 is mounted to a height adjustment assembly such that the position of the top brush 64 relative to the top of a vehicle being washed can be adjusted. As with the front brush described previously, the top brush 64 is preferably formed from a plurality of strips of closed-cell foam, although cloth, nylon bristles or other materials can be utilized while operating within the scope of the present invention.

In the preferred embodiment of the invention, the drive motor 68 coupled to the top brush 64 is an electric motor, the operation of which is controlled by the back overhead bridge controller. The back overhead bridge controller monitors the electric power being consumed by the drive motor 68 and can control the operation of the height adjustment assembly 70 to maintain the top brush 64 in contact with the vehicle to prevent damage to the vehicle. Specifically, as the top brush 64 contacts the top surface of the vehicle, the resistance between the rotating top brush and the vehicle increases, thus requiring an increase in the current drawn by the drive motor 68 to maintain the rotation of the top brush 64. The controller of the back overhead bridge monitors the amount of electric power consumed by the drive motor to maintain a relative constant contact force between the rotating top brush 64 and the top surface of the vehicle. A vehicle profile sensor 72 is operable to profile the top of the vehicle and is coupled to the back overhead bridge controller such that the controller can determine special vehicle profile characteristics and control the operation of the height adjustment assembly 70 to prevent damage to the vehicle.

In addition to the top brush 64, the back overhead bridge 34 includes a pair of side spray arms 74 that each include fluid spray manifolds 76 having a series of spaced nozzles 78 each operable to direct a liquid onto the vehicle during the performance of a wash cycle. In the embodiment of the invention shown in Figs. 4 and 5, each of the side spray arms 74 includes a wheel cleaning assembly 80 including a rotating brush 82 and a high pressure spray nozzle. The wheel cleaning assembly 80 includes a drive motor 83 that rotates the brush 82 to clean the wheels of a vehicle during the performance of the second wash cycle by the back overhead bridge 34. In addition, the wheel cleaning assembly 80 on the right side spray arm 74 includes a wheel sensing system 85 that is operable to find the wheel as the back overhead bridge moves over the vehicle.

Each of the generally vertical spray arms 74 are mounted to a trolley assembly 84 that is movable along a support rail 86 of the back overhead bridge 34 such that the position of the spray arms 74 relative to the stationary vehicle positioned in the wash area can be adjusted. As illustrated in Figs. 4 and 5, each of the spray arms 74 includes a vehicle side sensor 88 that is operable to determine the distance from the spray arm 74 to the vehicle during the second wash cycle. The pair of vehicle side sensors 88 are connected to the back bridge controller such that the back bridge controller can independently determine the distance of each of the spray arms 74 to the vehicle and control the movement of each spray arms 74 independently relative to the stationary vehicle. Thus, during the performance of the second wash cycle, the controller of the back overhead bridge 34 can selectively move the spray arms 74 toward and away from the vehicle based on the position of the vehicle within the wash area. In addition to sensing the sides of the vehicle, the vehicle side sensors 88 can be monitored by the back overhead bridge controller to detect the back of the vehicle.

Although not shown in detail in Figs. 2 and 3, the back overhead bridge 34 includes a drive assembly that moves the entire back overhead bridge 34 along the length of the side rails 24. The drive assembly for the back overhead bridge 34 is controlled by the controller of the back overhead bridge. Preferably, each of the side rails 24 includes spaced metallic targets that are sensed by the controller such that the controller can identify the position of the back overhead bridge 34 along the side rail as the back overhead bridge moves in either the forward or reverse direction.

Referring back to Fig. 1, the vehicle wash system 10 of the present invention includes a central controller 90 that is in communication with the controller for the front overhead bridge 32 and the controller for the back overhead bridge 34. Although the present invention is described as including a central controller 90 and front and back controllers, it should be understood that the entire control process could be performed by the central controller 90. In addition, the front and back controllers could provide coordinated control and eliminate the need for a central controller 90.

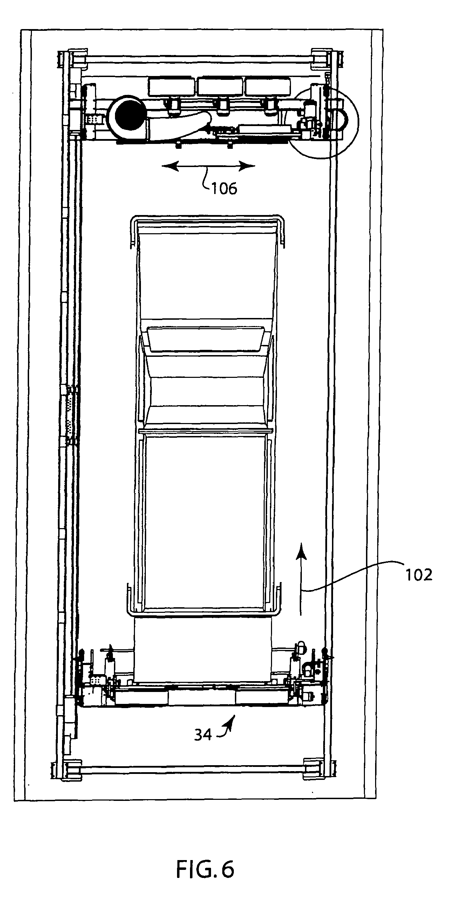

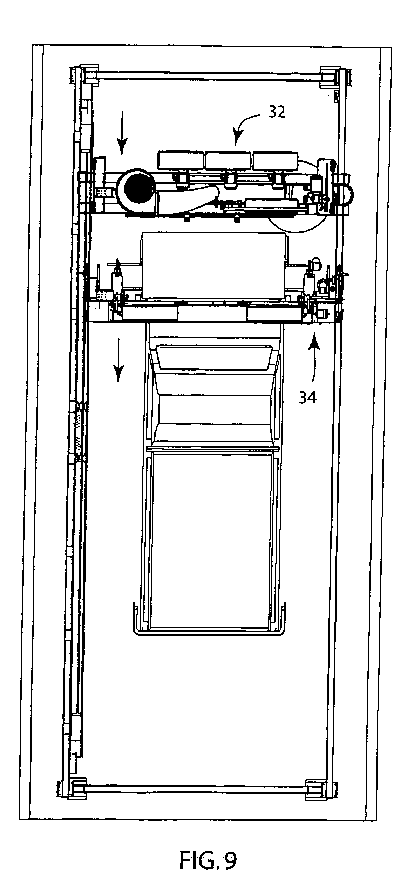

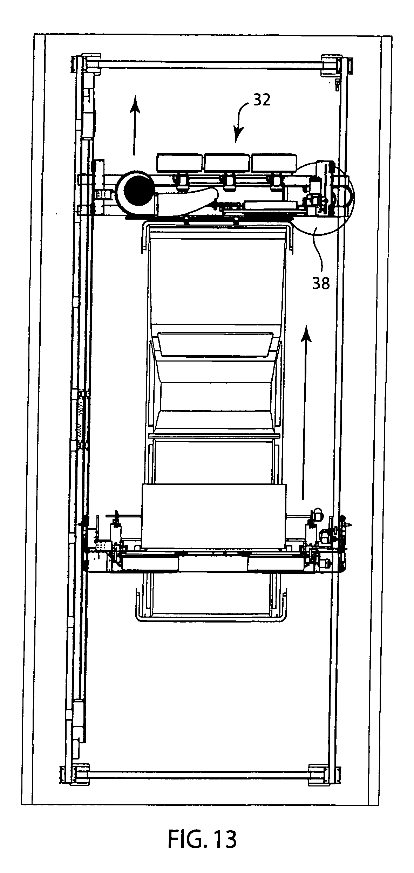

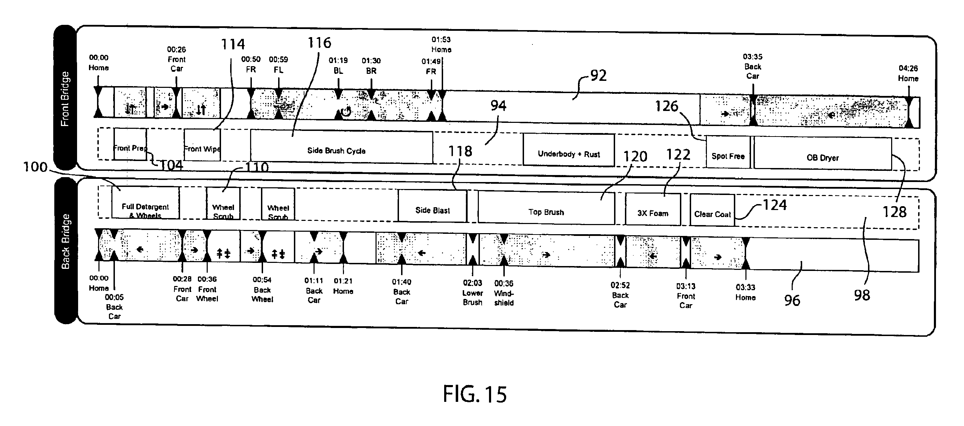

The details of the operation of the vehicle wash system in performing a complete wash process will now be described with reference to the flow timing diagram of Fig. 15 and the drawings of Figs. 6-14. Although a specific operational sequence is shown and described with reference to Fig. 15, it should be understood that the entire wash process could be modified to either remove or add additional wash cycles while operating within the scope of the invention. The embodiment shown in the Figures of the present application should be viewed as an exemplary embodiment of the invention and should not be deemed limiting with respect to the operation of the wash system.

As used throughout the above description and the following summary of a specific operational sequence, the term "wash process" is used to designate the entire sequence of operations on the vehicle carried out by both the front overhead bridge and the back overhead bridge. During the wash process, the front overhead bridge carries out a first wash cycle while the back overhead bridge carries out a second wash cycle. As part of both the first and second wash cycles, each of the front and back overhead bridges includes components that carry out different wash steps as part of the wash cycle. When a customer initially enters the vehicle wash system, the customer is able to select a wash service and thus select different wash steps to be performed during the entire wash process.

Fig. 1 illustrates the home position of both the front overhead bridge 32 and the back overhead bridge 34 after the vehicle 20 has been properly within the wash area 12. As the vehicle initially enters into the wash area, the front overhead bridge 32 is positioned at a loading position that defines the desired location for the vehicle in the wash area. In Fig. 1, the front bridge loading position would be generally aligned with the front bumper of the vehicle 20 shown in Fig. 1.

When the front overhead bridge 32 is positioned in the loading position, the first pair of vehicle presence sensors 63 shown in Fig. 2 detects when the vehicle first passes beneath the front overhead bridge 32. When the vehicle is detected, the front overhead bridge controller sends a signal to the central controller that then sends a signal to the instruction sign of the vehicle wash instructing the driver of the vehicle to stop the vehicle. In the case that the vehicle proceeds too far beneath the front overhead bridge 32 when the front overhead bridge is in the loading position, the second pair of vehicle presence sensors 60 detects the vehicle and the central controller indicates to the driver that the vehicle should reverse. Once the vehicle has been reversed far enough, the second pair of vehicle presence sensors 60 no longer detect the vehicle and the instruction sign signals the driver to stop and that the vehicle is in the desired position. Once the vehicle 20 has been properly positioned, the front overhead bridge 32 moves to the home position shown in Fig. 1 and the wash process can begin.

When the customer initially enters into the wash area 12, the top brush 64 is positioned above the vehicle and the side spray arms 74 are positioned towards the side boundaries 18. Thus, as the customer begins to enter into the wash area, the customer is presented with a generally open, clean and uncluttered wash area, which provides the customer with a positive overall initial impression. In addition, the customer is able to focus on the signal of the instruction sign as distractions and avoidances are not present.

As the vehicle continues to enter the wash area, the loading system described above positions the vehicle 20 within the wash area without the use of any floor mounted guides, treadles or rails. The instruction sign within the wash area directs the customer to stop the vehicle 20 within a range of locations within the wash area. As illustrated in Fig. 1, when the vehicle 20 is accurately positioned, the front overhead bridge 32 is positioned in front of the vehicle such that the customer does not need to drive next to or past the side brush 38, thereby increasing the comfort level for the customer. The combination of the front and back overhead bridges provide for a generally open wash area, which reduces the claustrophobic effect that some customers feel during the wash process.

Referring now to Fig. 15, thereshown is one exemplary operating sequence for both the front overhead bridge and the back overhead bridge during the completion of a wash process. Specifically, the operational sequence illustrated by Fig. 15 shows the movement and position of the front overhead bridge in bar 92 and the wash steps of the first wash cycle in bar 94. Likewise, bar 96 illustrates the movement of the back overhead bridge while bar 98 illustrates the wash steps of the second wash cycle carried out by the back bridge. As illustrated in Fig. 15, each of the bars 92-98 are oriented upon the same timeline and correlate the movement of the front and back overhead bridges relative to each other during the wash process. As discussed previously, the operational example shown in Fig. 15 is only one of many different sequences that can be utilized while operating within the scope of the present invention.

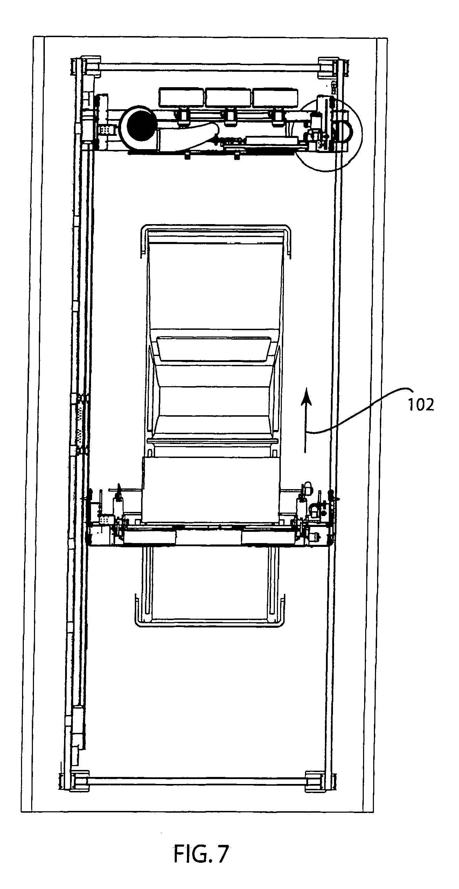

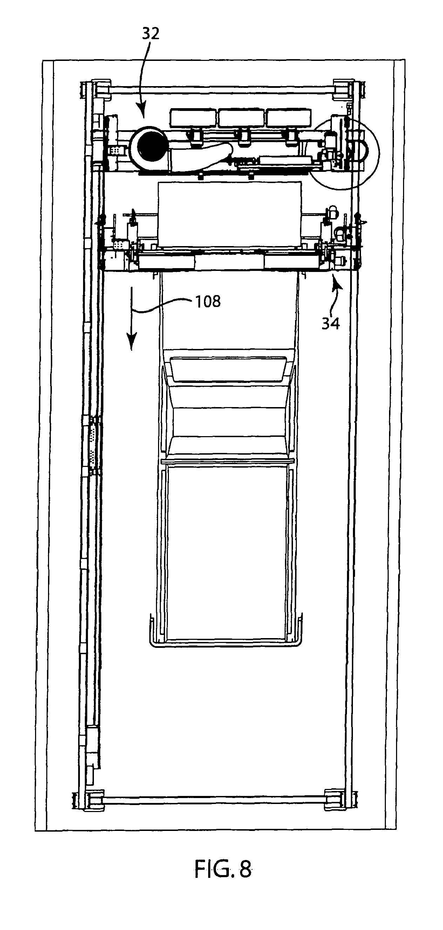

Initially, both the front overhead bridge 32 and the back overhead bridge 34 are at the home position, as illustrated in Fig. 1. It should be understood that the home position of the front and back overhead bridges shown are an exemplary embodiment of the invention and the home position may change based on wash area layout and the wash process being offered to the customer. At the beginning of the second wash cycle, the back overhead bridge moves forward until the vehicle side sensor 88 mounted to each of the spray arms 74 detect the back of the vehicle. Once the controller for the back overhead bridge identifies the back of the vehicle, the controller operates the required valving to provide detergent to each of the spray manifolds 76 to apply detergent to the vehicle, as illustrated by step 100 of Fig. 15. As detergent is applied to the vehicle, the back overhead bridge 34 moves along the length of the vehicle, as illustrated by the arrow 102 in Figs. 6 and 7 until the back overhead bridge 34 reaches the front of the vehicle, as illustrated in Fig. 8. As can be clearly seen in Fig. 8, the back overhead bridge 34 can perform the second wash cycle along the entire length of the vehicle from the rear bumper to the front bumper.

As illustrated in Fig. 15, as the back overhead bridge 34 is applying the detergent in step 100, the front overhead bridge 32 is performing a front prep, as illustrated in step 104. Specifically, the controller of the front overhead bridge moves the trolley 40 across the front of the vehicle in the direction shown by arrow 106 while a concentrated detergent or bug remover is applied to the front bumper of the vehicle by the vehicle front spray nozzle, mounted to the trolley 40.

Once the back bridge 34 has applied detergent to the entire surfaces of the vehicle, the back bridge begins to move back toward the rear of the vehicle, as shown by arrow 108 in Fig. 8 until the wheel sensing system 85 (Fig. 5) detect the front wheel. Once the wheel sensing system 85 detect the front wheel, the movement of the back bridge 34 is terminated and the back bridge begins the step of washing the front wheels of the vehicle, as indicated by step 110 in Fig. 15. To perform the wheel scrubbing step, the controller of the back overhead bridge 34 moves each of the spray arms 74 inward until the rotating brushes 82 contact the wheels of the vehicle. Once in contact with the wheels, the brushes 82 are rotated to perform the wheel scrubbing service. The back overhead bridge will then move towards the rear of the vehicle and perform a wheel scrubbing service on the back wheels of the vehicle 20.

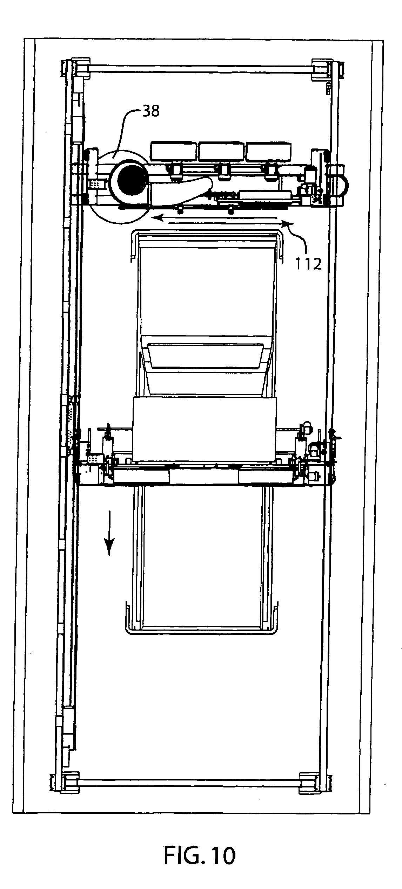

At the same time the back overhead bridge 34 is scrubbing the wheels, the front overhead bridge 32 finds the front of the vehicle and begins to rotate the side brush 38 in a counter-clockwise direction. As the side brush 38 is rotating, the trolley 40 of the front overhead bridge moves the side brush 38 in multiple passes along the front of the vehicle, as indicated by the arrows 112 in Fig. 10 to perform the front wipe service 114. The side brush 38 makes multiple passes across the front bumper since this portion of the vehicle typically includes bugs and other hard to remove dirt and debris.

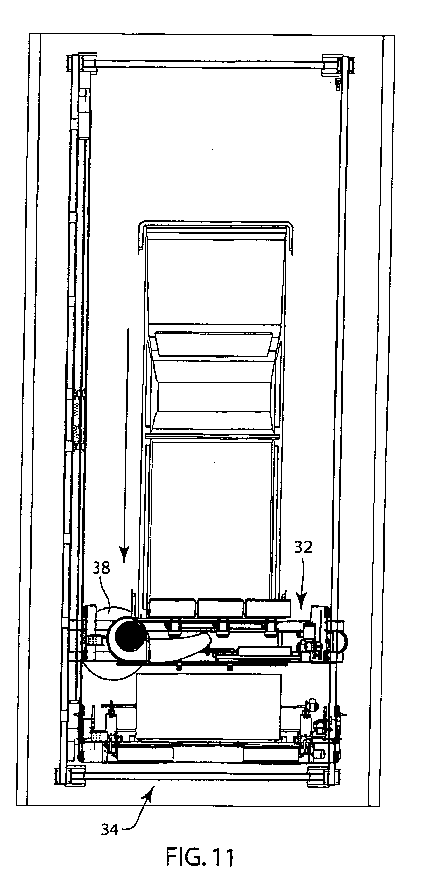

Referring back to Fig. 15, once the front wipe service 114 has been completed, the side brush 38 is moved to the front right of the vehicle and the side brush service begins, as shown by reference numeral 116. During the side brush service 16, the side brush is initially moved from the front right of the vehicle to the front left of the vehicle as the side brush rotates. Once the side brush reaches the front left of the vehicle, the entire overhead bridge 32 begins moving towards the rear of the vehicle until the side brush reaches the back left of the vehicle, as illustrated by Fig. 11.

When the side brush 38 reaches the back left of the vehicle, the back overhead bridge 34 is in the home position and located out of the way of the front overhead bridge 32. As can be understood by the flow diagram of Fig. 15 and the drawings of Figs. 10 and 11, both the front overhead bridge 32 and the back overhead bridge 34 move in the same direction along the length of the vehicle during portions of the wash process. During the movement of both the front and back overhead bridges, a system of proximity switches and series of metallic targets are used to monitor the position of each of the front and back overhead bridges 32, 34 along the length of the side rail 24. Based upon position calculations from the series of proximity switches, the central controller 90 can determine the distance between the front overhead bridge 32 and the back overhead bridge 34 at all times during the wash process. If the front and back overhead bridges 32, 34 become too close, the central controller can either slow the movement of one of the bridges, speed up the movement of one of the bridges, change the speeds of both bridges or entirely stop the movement of one of the bridges to separate the bridges by an acceptable buffer distance.

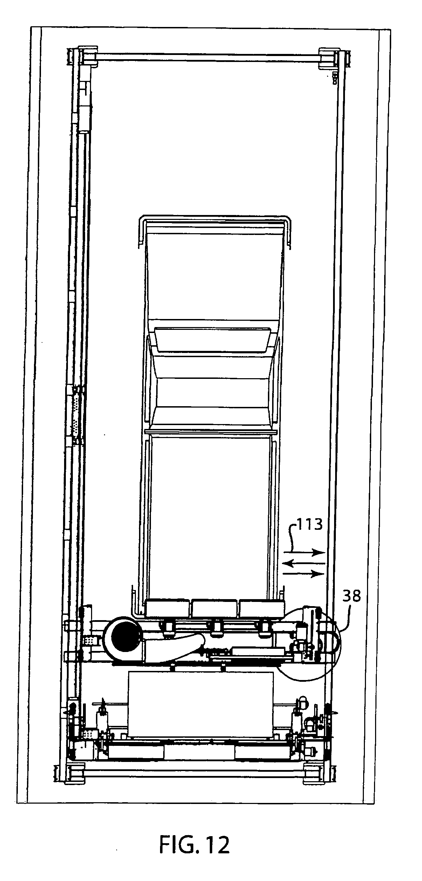

Referring back to Fig. 11, once the side brush 38 reaches the back left of the vehicle, the direction of rotation of the side brush 38 is reversed such that the side brush now operates in a clockwise direction. Once the direction of rotation has been reversed, the side brush 38 is moved between the back left of the vehicle and the back right of the vehicle in multiple passes, as illustrated by arrows 113 in Fig. 12. The multiple passes of the side brush again provides for enhanced cleaning of the back of the vehicle. After the multiple passes, the side brush moves to the back right of the vehicle and the front overhead bridge 32 begins moving forward along the vehicle such that the side brush 38 cleans the right side of the vehicle. Once the side brush 38 reaches the front right of the vehicle, rotation of the side brush 38 terminates and the entire front overhead bridge 32 returns to its home position.

Referring back to Fig. 15, as the front overhead bridge 32 is moving toward the front of the vehicle and the side brush 38 is cleaning the right side of the vehicle, the back overhead bridge begins movement in the same direction from its home position toward the front of the vehicle. As the back overhead bridge 34 begins movement, the back overhead bridge begins the side blast service 118. During the side blast service, the controller of the back overhead bridge directs high pressured fluid through the spray manifolds 76 and the series of spaced nozzles 78. The high pressure spray directed toward each side of the vehicle further aids in removing dirt from the vehicle that has not yet been removed by the operation of the rotating side brush. The high pressure supply of fluid from the spray manifold 76 is directed onto the sides of the vehicle as the back overhead bridge 34 moves from the rear of the vehicle to the front of the vehicle.

Once the back overhead bridge reaches the front of the vehicle, the controller lowers the top brush 64 and begins the top brush service 120 shown in Fig. 15. Specifically, the controller of the back overhead bridge lowers the top brush 64 until the electric motor 68, shown in Fig. 4, uses electric power that indicates that it is in contact with the vehicle 20. Once the top surface of the vehicle has been contacted, the back overhead bridge 34 is moved toward the rear of the car while the top brush 64 is held a constant distance from the top surface of the vehicle based upon the electric power usage of the electric motor 68, as shown in Fig. 14. In this manner, the top brush 74 contacts the entire top surface of the vehicle from the front to the rear to enhance the operation of the car wash system.

Once the top brush cycle 120 has been completed, the back overhead bridge 34 can again move from the back of the car to the front of the car while applying a foam wax service in step 122 through the pair of spray manifolds. Once the back overhead bridge 34 reaches the front of the car, the direction of movement of the back overhead bridge is reversed and a clear coat service is applied to the vehicle in step 124 until the overhead bridge reaches the back of the car and then continues to the home position.

While the back bridge is applying the clear coat service in step 124, the front bridge moves toward the back of the car and applies a spot-free rinse service in step 126. The spot-free rinse is applied to the car by the overhead spray manifold 56, shown in Fig. 2. Once again, during the application of the spot-free rinse service by the front bridge and the clear coat service by the back bridge, both the front and back bridges are moving in the same direction.

Once the front bridge reaches the back of the car, the front bridge begins the drying service in step 128 shown in Fig. 15. During the drying service, each of the blower assemblies 48 shown in Figs. 2 and 3 are activated to direct a flow of air onto the vehicle to remove the water remaining on the surface of the vehicle. Each of the blower assemblies 48 remain activated as the front overhead bridge moves toward the front of the car and ultimately the home position. In the embodiment of the invention shown in Fig. 15, the drying service in step 128 has a duration of approximately 45 seconds, although other durations can be utilized while operating within the scope of the invention. Once the drying service in step 128 has been completed, the sign within the wash area indicates to the customer that the wash process has been completed and that the customer can leave the wash area through the exit 16 shown in Fig. 1.

As can be clearly understood by the timing diagram of Fig. 15, both the front overhead bridge and the back overhead bridge operate simultaneously to perform different service and cycles on the vehicle during the entire wash process. Specifically, the front overhead bridge carries out a first wash cycle on the vehicle that includes much different washing steps than the steps carried out by the back bridge as part of the second wash cycle. In this way, both the front bridge and the back bridge combine to complete the entire wash process on the vehicle positioned within the vehicle wash area. Each of the front and back overhead bridges 32, 34 perform their respective wash cycles on the entire vehicle from the front to the rear.

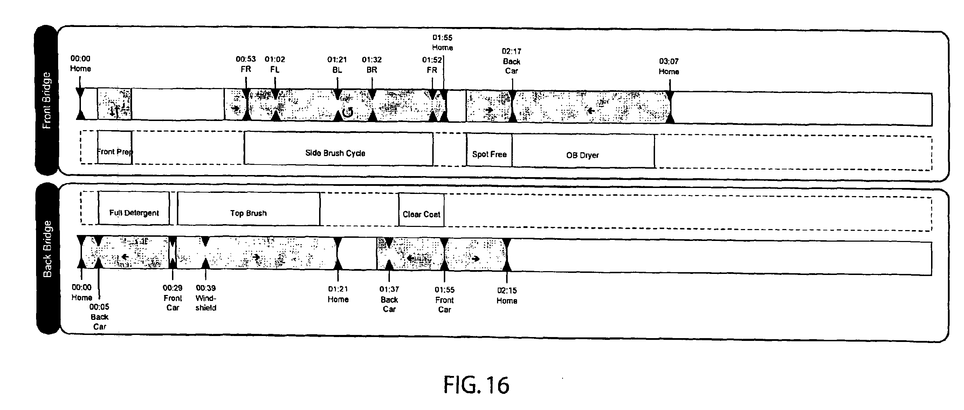

Fig. 16 illustrates a wash timing diagram in which the wheel cleaning assemblies 80, included as part of the back overhead bridge, are not included with the vehicle wash system. As can be understood by the timing diagram of Fig. 16, the time required to complete the entire wash process is reduced due to the elimination of the wheel scrubbing steps. Although two different timing diagrams are shown in Figs. 15 and 16, it should be understood that a large number of combinations of the first wash cycle and the second wash cycle can be programmed and executed by the vehicle wash system of the present invention.

Referring back to Fig. 1, the vehicle wash system 10 includes a first, front overhead bridge 32 and a second, back overhead bridge 34 that are each independently movable along the pair of spaced side rails 24 to carry out separate cycles of a complete wash process. However, it should be understood that two overhead bridges is the preferred embodiment of the present invention but that the use of two overhead bridges should not be limiting as more than two could be an alternate embodiment.

In addition, the pair of spaced rails 24 is the preferred embodiment of the present invention but that the overhead bridges support should not be limiting as a single rail could be an alternate embodiment. In addition, more than two spaced rails could be an alternate embodiment.

In addition, the pair of side spray arms 74 that are included as part of the back overhead bridge 34 is the preferred embodiment of the present invention but that the spray arms may be included as part of the back overhead bridge should not be limiting as the side spray arms 74 included with the front overhead bridge could be an alternate embodiment.

In addition, the front overhead bridge 32 includes a side cleaning device 36 is the preferred embodiment of the present invention but that a single side cleaning devices 36 may be included as part of the front overhead bridge should not be limiting as multiple side cleaning devices 36 included with the front overhead bridge could be an alternate embodiment.

In addition, the front overhead bridge 32 includes a side brush 38 and the back overhead bridge 34 includes a top brush 64 is the preferred embodiment of the present invention but the use of friction cleaning brushes should not be limiting as touch-free cleaning devices included with the front and rear overhead bridges could be an alternate embodiment.

## Claims

1. An automatic vehicle wash system for performing a wash process on a vehicle within a wash area, the system comprising:
an overhead support;
a first overhead bridge movable along the overhead support and operable to perform a first wash cycle on the vehicle;
a second overhead bridge movable along the overhead support and operable to perform a second wash cycle on the vehicle,
wherein both the first overhead bridge and the second overhead bridge are movable along the overhead support such that the first overhead bridge performs the first wash cycle along the entire length of the vehicle and the second overhead bridge performs the second wash cycle along the entire length of the vehicle.

2. The vehicle wash system of claim 1 wherein the first overhead bridge and the second overhead bridge are movable in both the same direction and opposite directions along the overhead support.

3. The vehicle wash system of claim 1 wherein the first overhead bridge includes a side cleaning device.

4. The vehicle wash system of claim 3 wherein the side cleaning device is a rotating side brush selectively movable along the first overhead bridge to contact a first end, a second end and opposite sides of the vehicle during the first wash cycle.

5. The vehicle wash system of claim 4 wherein the rotating side brush rotates in a first direction as the side brush moves along a first side of the vehicle and wherein the rotating side brush rotates in a second, opposite direction as the side brush moves along a second side of the vehicle.

6. The vehicle wash system of claim 1 wherein the second overhead bridge includes a top cleaning device operable to clean a top surface of the vehicle during the second wash cycle.

7. The vehicle wash system of claim 6 wherein the top cleaning device is a rotating top brush selectively movable into contact with the top surface of the vehicle to perform a step of the second wash cycle on the vehicle.

8. The vehicle wash system of claim 7 wherein the second overhead bridge includes a pair of side arms each positioned on opposite sides of the vehicle.

9. The vehicle wash system of claim 8 wherein the second overhead bridge includes a pair of wheel cleaning devices suspended from the second overhead bridge.

10. The vehicle wash system of claim 9 wherein each of the side arms includes one of the wheel cleaning devices.

11. The vehicle wash system of claim 1 wherein the first overhead bridge is positioned in front of the vehicle at the beginning of the wash process and the second overhead bridge is positioned behind the vehicle at the beginning of the wash process.

12. An automatic vehicle wash system for performing a wash process on a vehicle within a wash area, the system comprising:
an overhead support;
a first overhead bridge movable along the overhead support and operable to perform a first wash cycle, the first overhead bridge including a side cleaning device operable to clean a first end, a second end and opposite first and second sides of the vehicle during the first wash cycle; and
a second overhead bridge movable along the overhead support and operable to perform a second wash cycle, the second overhead bridge including a top cleaning device operable to clean a top surface of the vehicle from the first end to the second end of the vehicle during the second wash cycle.

13. The vehicle wash system of claim 12 wherein the side cleaning device is a rotating side brush selectively movable into contact with the first end, the second end and the first and second sides of the vehicle.

14. The vehicle wash system of claim 13 wherein the top cleaning device is a rotating top brush selectively movable into contact with the top surface of the vehicle.

15. The vehicle wash system of claim 14 wherein the second overhead bridge includes a pair of side arms each positioned on opposite sides of the vehicle, each of the side arms being selectively movable toward and away from the vehicle.

16. The vehicle wash system of claim 15 wherein each of the side arms includes a wheel cleaning device.

17. The vehicle wash system of claim 12 wherein the first overhead bridge is positioned in front of the vehicle at the beginning of the wash process and the second overhead bridge is positioned behind the vehicle at the beginning of a wash process.

18. A method of performing a wash process on a vehicle within a wash area, the method comprising the steps of:
positioning a first overhead bridge along an overhead support, the first overhead bridge being operable to perform a first wash cycle;
positioning a second overhead bridge along the overhead support, the second overhead bridge being operable to perform a second wash cycle;
moving the first overhead bridge along the entire length of the vehicle to perform the first wash cycle on the entire vehicle; and
moving the second overhead bridge along the entire length of the vehicle to perform the second wash cycle on the entire vehicle.

19. The method of claim 18 further comprising the step of coordinating the movement of the first and second overhead bridges such that the first wash cycle and the second wash cycle are concurrently conducted.

20. The method of claim 18 wherein the first overhead bridge includes a side cleaning device, wherein the side cleaning device is selectively movable toward and away from the vehicle.

21. The method of claim 20 wherein the side cleaning device is a rotating side brush selectively movable into contact with a first end of the vehicle, second end of the vehicle, a first side of the vehicle and a second side of the vehicle.

22. The method of claim 18 wherein the second overhead bridge includes a top cleaning device operable to clean a top surface of the vehicle.

23. The method of claim 22 wherein the top cleaning device is a rotating top brush selectively movable into contact with the top surface of a vehicle as the second overhead bridge moves relative to the vehicle.

24. The method of claim 23 wherein the rotating top brush is operable to contact the top surface of the vehicle from the first end of the vehicle to the second end of the vehicle.

25. The method of claim 18 further comprising the steps of:
monitoring the distance between the first and second overhead bridges during the wash process; and
controlling the speed and direction of movement of the first and second overhead bridges to maintain a minimum distance between the overhead bridges during the wash process.

26. The method of claim 18 further comprising the steps of:
positioning the first overhead bridge in front of the vehicle at the beginning of the wash process; and
positioning the second overhead bridge behind the vehicle at the beginning of the wash process.
